**Europäisches Patentamt**

**European Patent Office**

**Office européen des brevets**

(11) Veröffentlichungsnummer: **0 090 765**
**B1**

(12) **EUROPÄISCHE PATENTSCHRIFT**

(45) Veröffentlichungstag der Patentschrift:
**27.09.89**

(21) Anmeldenummer: **83730035.9**

(22) Anmeldetag: **29.03.83**

(51) Int. Cl.⁴: **B 60 C 27/08**

(54) Reifenkette, insbesondere Gleitschutzkette und Verfahren zu deren Herstellung.

(30) Priorität: **31.03.82 DE 3212361**
**31.03.82 DE 3212360**
**31.03.82 DE 3212364**

(43) Veröffentlichungstag der Anmeldung:
**05.10.83 Patentblatt 83/40**

(45) Bekanntmachung des Hinweises auf die Patenterteilung:
**27.09.89 Patentblatt 89/39**

(84) Benannte Vertragsstaaten:
**FR GB IT SE**

(56) Entgegenhaltungen:
**CH-A- 399 213**
**DE-C- 963 039**
**US-A- 3 768 533**

(73) Patentinhaber: **RUD-Kettenfabrik Rieger & Dietz GmbH u. Co., Friedensinsel, D-7080 Aalen 1 (DE)**

(72) Erfinder: **Holzwarth, Dietmar, Vogelhofstrasse 51, D-7070 Schwäbisch Gmünd (DE)**
Erfinder: **Hofmann, Peter, Heulenbergweg 76, D-7080 Aalen-Unterkochen (DE)**
Erfinder: **Eberhardt, Franz, Gartenstrasse 48/1, D-7080 Aalen (DE)**

(74) Vertreter: **Böning, Manfred, Dr. Ing. et al, Patentanwälte Dipl.-Ing. Dieter Jander Dr. Ing. Manfred Böning Kurfürstendamm 66, D-1000 Berlin 15 (DE)**

ACTORUM AG

**Beschreibung**

Die Erfindung betrifft eine Reifenkette, insbesondere Gleitschutzkette, mit aus Profilstababschnitten gebildeten Horizontal- und Vertikalgliedern und einer Knotenpunkte aufweisenden Netzkonfiguration, bei der mindestens einige vertikal orientierte Kettenglieder ein der Lauffläche des Fahrzeugreifens zugeordnetes Unterteil und ein mit diesem durch Schweißen verbundenes, der Fahrbahn zugeordnetes Oberteil aufweisen.

Aus der US-A-3 768 533 ist eine Reifenkette der vorstehenden Art bekannt, bei der die das Laufnetz bildenden Vertikalglieder jeweils ein von einem Streifen gebildetes C-förmiges Unterteil mit einem Einführschlitz und ein von einer Platte gebildetes, den Einführschlitz schließendes Oberteil aufweisen. Die Oberteile sind dabei mit den den jeweiligen Einführschlitz begrenzenden geraden Enden der Unterteile derart durch Schweißen verbunden, daß sie die Gleitschutzwirkung der bekannten Kette erhöhende Vorsprünge bilden. Die bekannte Konstruktion vermag insofern nicht voll zu befriedigen, als bei ihr die bogenförmigen Enden der C-förmigen Unterteile in starkem Maße auf Biegung beansprucht werden und diese folglich zu Ermüdungsbrüchen neigen. Als nachteilig erweist sich darüber hinaus, daß eine vollflächige Verschweißung der sich überdeckenden Zonen der Ober- und Unterteile Schwierigkeiten bereitet.

Bei anderen bekannten Reifenketten werden sowohl die Vertikalglieder als auch die Horizontalglieder durch Biegen von Profilstababschnitten hergestellt, deren mit ihren Stirnseiten gegeneinander zur Anlage kommenden Enden durch elektrische Widerstandsstumpfschweißung miteinander verbunden werden. Eine derartige Herstellungstechnik bringt insbesondere dann Probleme mit sich, wenn in einem Gliederverband die Horizontal- und Vertikalglieder verschieden gestaltet sein sollen. Eine Verschiedenheit ist erwünscht, wenn man Horizontal- und Vertikalglieder den an sie gestellten Anforderungen entsprechend ausbilden möchte.

Bekannt sind auch Reifenketten, bei denen mindestens ein Teil der von Ovalgliedern gebildeten Horizontalglieder mit quer zu ihrer Längsachse angeordneten, jeweils beide Horizontalglieder umschließenden Stützgliedern versehen ist (DE-PS 1 680 476). Die Stützglieder werden dabei von ovalen Rundstahlgliedern mit jeweils einem durchgehenden und jeweils einem offenen, d.h. eine unverschweißte Stoßstelle aufweisenden Schenkel gebildet. Das Anbringen der Stützglieder ist bei der bekannten Konstruktion vergleichsweise aufwendig, da die Stützglieder unter Einsatz entsprechender Vorrichtungen und Werkzeuge um die Horizontalglieder herumgebogen werden müssen, wenn man nicht auf die Anwendung üblicher und wirtschaftlicher Verfahren zur Fertigung von Kettensträngen bzw. Kettenstrangabschnitten verzichten will. Als nachteilig erweist sich zudem der Umstand, daß eine Anpassung der Schenkel der Stützglieder an die auf sie ausgeübten unterschiedlichen Beanspruchungen und die von ihnen zu erfüllenden Aufgaben nur in engen Grenzen möglich ist. So scheidet insbesondere die Wahl eines gegenüber dem Material des reifenseitigen Schenkels verschleißfesteren Materials für den der Fahrbahn zugewandten Schenkel aus. Auch sind der Freizügigkeit hinsichtlich der Formgebung und der Größe des Verschleißvolumens des fahrbahnseitigen Schenkels vergleichsweise enge Grenzen gesetzt. Die offene Bauweise der bekannten Stützglieder fördert schließlich Brüche infolge Dauerbelastung.

Der Erfindung liegt die Aufgabe zugrunde, eine Reifenkette der in Betracht gezogenen Art zu schaffen, die sich auf einfache Weise herstellen läßt und die über gute Festigkeitseigenschaften verfügt. Diese Aufgabe wird erfindungsgemäß dadurch gelöst, daß die Unterteile im wesentlichen U-förmig ausgebildet sind und daß die nach oben weisenden Stirnflächen der beiden U-Schenkel des Unterteils mit den Enden des als Stützbalken ausgebildeten Oberteils verschweißt sind.

Die erfindungsgemäße Reifenkette bietet den Vorteil, daß das Zusammenfügen von im Sinne der Erfindung ausgebildeten Vertikalgliedern und Horizontalgliedern auf einfache Weise möglich ist und daß man durch die geeignete Auswahl von Unterteilen und Stützbalken den Vertikalgliedern eine den jeweiligen Anforderungen besonders gerecht werdende Form geben kann. Es ist außerdem möglich, für die Stützbalken und die Unterteile unterschiedliche Materialsorten zu wählen, d.h. beispielsweise für die Stützbalken ein Material größerer Verschleißfestigkeit zu verwenden. Entsprechendes gilt für die Anbringung von im Sinne der Erfindung ausgebildeten Stützgliedern auf Horizontalgliedern. Das Verschweißen der beiden Teile, insbesondere der Stützglieder miteinander ist einfach, da die Schweißstellen an günstigen, d.h. für die Schweißwerkzeuge leicht zugänglichen Stellen liegen. Die Dauerfestigkeit eines geschlossenen Stützgliedes ist der eines offenen Stützgliedes deutlich überlegen. Vorteilhaft ist außerdem, daß die Länge des der Fahrbahn zugewandten Stützbalkens größer ist als die Länge des reifenseitigen Schenkels und daß auf diese Weise eine Verstärkung der Buge der Stützglieder bzw. der entsprechenden Vertikalglieder erreicht wird. Schließlich lassen sich die Stützglieder mit geringerem Aufwand auf die Horizontalglieder eines durchgehenden aus Horizontal- und Vertikalgliedern bestehenden Kettenstranges aufbringen als es bei der Fertigung der bekannten Reifenkette erforderlich ist.

Die Erfindung betrifft außerdem ein Verfahren zum Herstellen von Ketten bei dem geschlossene Kettenglieder in offene Kettenglieder eingehängt bzw. eingelegt und die offenen Kettenglieder anschließend durch elektrisches Widerstandsstumpfschweißen geschlossen werden, d.h. ein Verfahren, das sich besonders für die Herstellung von Reifenketten der zuvor erläuterten Art eignet und bei dem die Gewähr für eine einwandfreie elektrische Widerstandsstumpfschweißung gegeben ist. Dieses Verfahren ist dadurch gekennzeichnet, daß als offene Kettenglieder Kettenglieder verwendet werden, die aus einem U-förmigen Unterteil und einem stabförmigen Oberteil bestehen und daß die miteinander zu verschweißenden Enden der Unter- und Oberteile der offenen Kettenglieder vor dem Schweißen mit im wesentlichen dachförmigen Verjüngungen versehen werden, deren Scheitel sich in der Schweißstellung kreuzen.

Bei der Verwendung von Kettengliedern der genannten Art wird der Stromübergang zwischen dem Ober- und dem Unterteil verbessert und eine intensive Erwärmung im Bereich der Schweißstellen erreicht. Da die Scheitel der Verjüngungen sich kreuzen, sind die Anforderungen an die Genauigkeit beim Zusammenfügen des Ober- und Unterteils begrenzt. Geringe ungewollte Verschiebungen beeinträchtigen die Festigkeit der Schweißstellen nicht.

Weitere Einzelheiten und Merkmale der Erfindung ergeben sich aus den Unteransprüchen und der nachfolgenden Beschreibung von in der beigefügten Zeichnung dargestellten Ausführungsbeispielen. Es zeigen:

Fig. 1 einen Kettenstrangabschnitt aus Vertikal- und Horizontalgliedern;

Fig. 2 den Querschnitt eines ersten Vertikalgliedes;

Fig. 3 den Querschnitt eines zweiten Vertikalgliedes;

Fig. 4 den Querschnitt eines dritten Vertikalgliedes;

Fig. 5 die Draufsicht auf ein sogenanntes Kettenkreuz;

Fig. 6 die Draufsicht auf das Kettennetz einer Reifenschutzkette;

Fig. 7 einen Knotenpunkt eines Kettennetzes;

Fig. 8 ein Vertikalglied mit einer Auflage aus hochverschleißfestem Material;

Fig. 9 die Draufsicht auf das Laufnetz einer Gleitschutzkette mit unter Verwendung ringförmiger Horizontalglieder gebildeter Knotenpunkte;

Fig. 10 die Draufsicht auf ein abgewandeltes Laufnetz.

Fig. 11 die Draufsicht auf den Knotenpunkt einer weiteren Gleitschutzkette;

Fig. 12 im vergrößerten Maßstab die Seitenansicht des Knotenpunktes gemäß Fig. 11;

Fig. 13 im vergrößerten Maßstab teilweise im Schnitt die Draufsicht auf den Knotenpunkt gemäß Fig. 12;

Fig. 14 teilweise im Schnitt die Seitenansicht eines Abschnittes eines Stützglieder tragenden Kettenstranges einer Reifenkette;

Fig. 15 einen Schnitt längs der Linie II–II in Fig. 14;

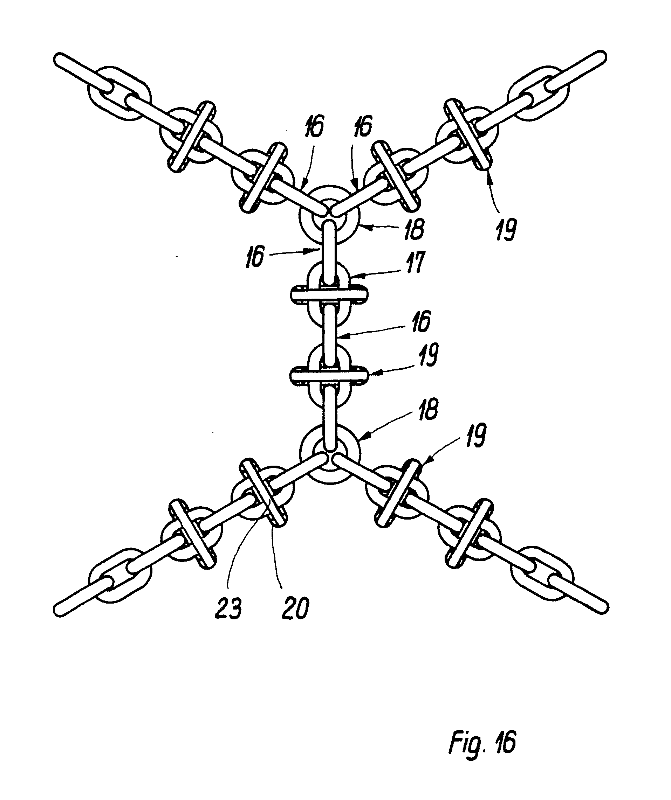

Fig. 16 eine Draufsicht auf einen Teil der Reifenkette gemäß Fig. 1 und 2;

Fig. 17 eine der Fig. 14 entsprechende Seitenansicht von Kettengliedern einer modifizierten Reifenkette;

Fig. 18 einen Schnitt längs der Linie V–V in Fig. 4;

Fig. 19 einen der Fig. 5 entsprechenden Schnitt durch eine Reifenkette mit einem modifizierten Stützglied;

Fig. 20 einen Schnitt durch das Stützglied gemäß Fig. 6;

Fig. 21 einen der Fig. 5 entsprechenden Schnitt durch eine weitere Reifenkette mit einem modifizierten Stützglied;

Fig. 22 einen Schnitt durch das Stützglied gemäß Fig. 8;

Fig. 23 eine perspektivische Ansicht eines Unterteils und eines Oberteils eines offenen Kettengliedes einer Kette vor dem Schweißen;

Fig. 24 die Seitenansicht eines Unterteils und eines Oberteils abgewandelter Bauart und

Fig. 25 die Stirnansicht des Unter- und Oberteiles gemäß Fig. 24.

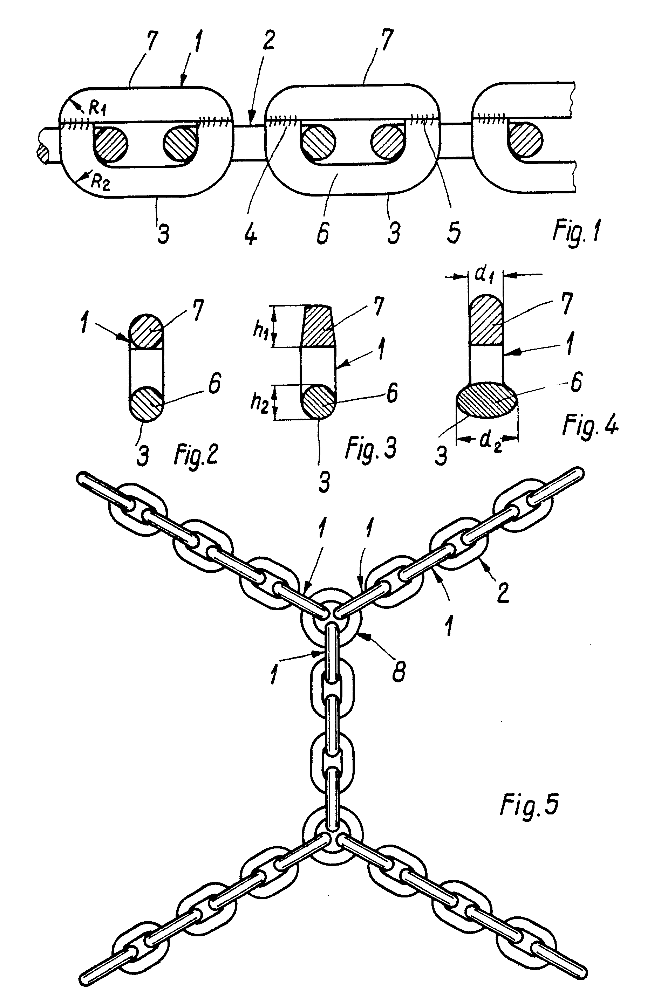

In Fig. 1 sind 1 Vertikalglieder eines Kettenstranges, welche durch ovale Horizontalglieder 2 miteinander verbunden sind. Jedes der Vertikalglieder 1 besteht aus einem Unterteil 3 mit Enden 4 und 5 und einem Joch 6. Die Enden 4 und 5 eines jeden Unterteils sind mit einem Stützbalken 7 durch Schweißung verbunden. Wie man erkennen kann, sind die Enden des Stützbalkens 7 abgerundet. Der Radius $R_1$ der Abrundungen des Stützbalkens 7 ist dabei kleiner als der Außenradius $R_2$ der Bogen des Unterteils 3.

Die Vertikalglieder 1 können den jeweiligen Anforderungen entsprechend ausgestaltet sein. Fig. 2 zeigt ein einfaches Vertikalglied, dessen Unterteil 3 im wesentlichen den gleichen Querschnitt wie sein Stützbalken 7 hat. Demgegenüber ist der Stützbalken 7 des Vertikalgliedes 1 gemäß Fig. 3 stärker ausgebildet als sein Unterteil 3. Dies erkennt man an den unterschiedlichen Höhen $h_1$ und $h_2$.

Fig. 4 zeigt ein Vertikalglied mit einem vergleichsweise breiten Unterteil 3 und einem vergleichsweise schmalen Stützbalken 7.

Fig. 5 zeigt die Draufsicht auf ein Kettenkreuz eines Kettennetzes, welches mit Vertikalgliedern 1 gemäß Fig. 3 ausgebildet ist. Man erkennt, daß die Knotenpunkte von jeweils drei Vertikalgliedern 1 und einem kreisringförmigen Horizontalglied 8 gebildet werden.

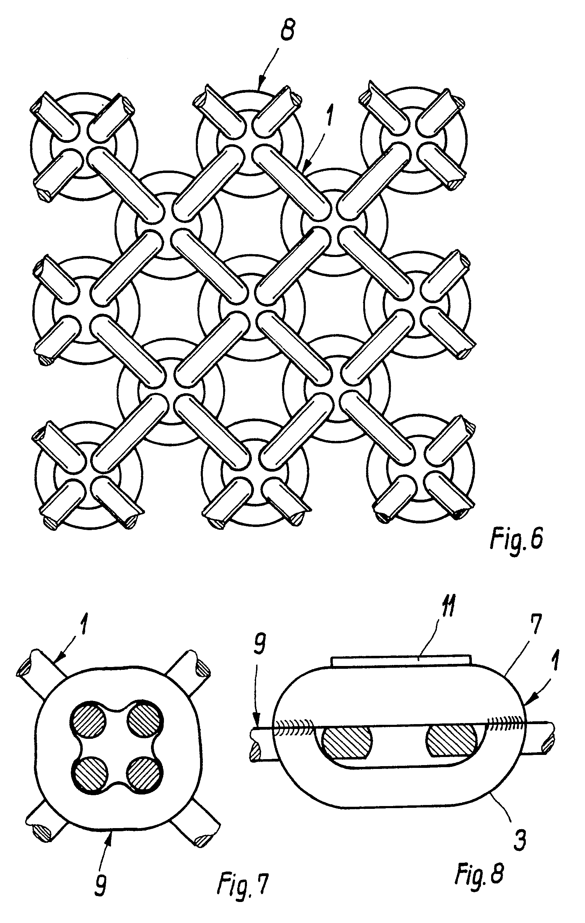

Fig. 6 zeigt die Draufsicht auf das Kettennetz einer Reifenschutzkette aus Vertikalgliedern 1 und kreisringförmigen Horizontalgliedern 8. Weil die Vertikalglieder 1 augrund ihrer zweiteiligen Ausbildung die Funktion von Verbindungsgliedern übernehmen, können bei der Montage der Reifenschutzkette fertig gebogene und geschweißte Horizontalglieder 8 Verwendung finden. Der Innendurchmesser dieser Horizontalglieder 8 kann kleiner gehalten werden als der Innendurchmesser von Horizontalgliedern, die bei der Kettenmontage gebogen und geschweißt werden müssen. Ein kleiner Innendurchmesser eines Horizontalgliedes erhöht nicht nur die Festigkeit sondern auch die Netzdichte einer Reifenschutzkette und ist daher außerordentlich erwünscht.

Die Fig. 7 und 8 zeigen, daß man auch Horizontalglieder 9 verwenden kann, die von Stanz- oder Schmiedeteilen gebildet werden und eine besonders kompakte Bauart von Reifenschutzketten ermöglichen. Das Vertikalglied 1 gemäß Fig. 8 besitzt einen Stützbalken 7, der an seiner der Fahrbahn zugewandten Seite mit einer Auflage 11 aus hochverschleißfestem Material versehen ist, das vorzugsweise durch Auftragsschweißung aufgebracht wird.

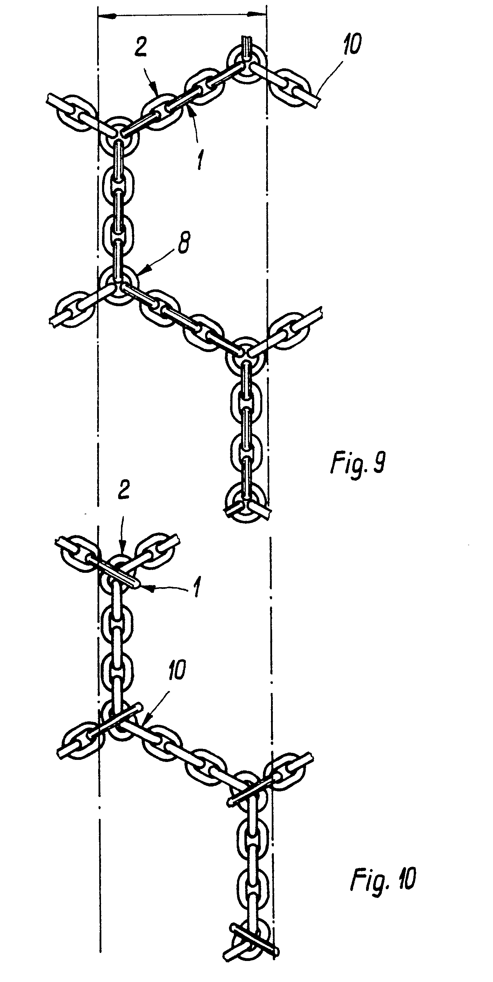

Fig. 9 zeigt ein Kettennetz, bei dem die außerhalb des Laufnetzes gelegenen Vertikalglieder 10 von normalen Ovalgliedern gebildet werden, während die Vertikalglieder 1 wiederum im Sinne der Erfindung ausgebildet sind.

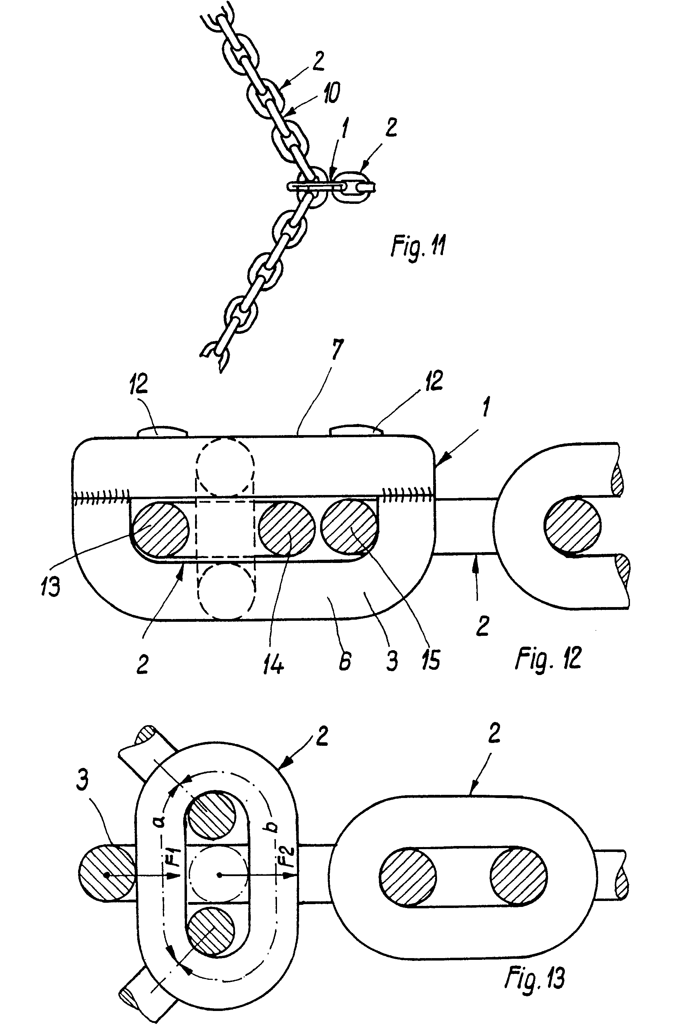

In Fig. 10 ist ein Teil eines Laufnetzes einer Reifenkette dargestellt, bei der die Knotenpunkte von Vertikalgliedern 1 gebildet werden, während die übrigen Kettenglieder aus normalen, d.h. aus Rundstahl gebogenen und geschweißten Horizontalgliedern 2 und Vertikalgliedern 10 bestehen. Einen Knotenpunkt einer aus normalen Kettengliedern 2 und 10 hergestellten Kette zeigt auch die Fig. 11. Der Knotenpunkt der Kette gemäß Fig. 11 ist in den Fig. 12 und 13 näher dargestellt. Man erkennt, daß das Vertikalglied 1 die beiden Schenkel 13 und 14 eines ersten Horizontalgliedes 2 und den Bug 15 eines zweiten Horizontalgliedes 2 umschließt. Der Stützbalken 7 ist bei diesem Ausführungsbeispiel mit zur Erhöhung der Griffigkeit versehenen Höckern 12 ausgestattet.

Die in den Fig. 12 und 13 dargestellte Verbindung zweier Rundstahlkettenstränge erweist sich als besonders vorteilhaft. Der Grund hierfür besteht darin, daß das über die beiden Schenkel 13 und 14 greifende Vertikalglied 1 den Schenkel 13 nur über den Bereich a auf Biegung beansprucht. Die Biegezone, auf die die Kraft $F_1$ einwirkt, ist mithin vergleichsweise klein. Würde man, wie dies normalerweise der Fall ist, in das horizontale Kettenglied 2 ein normales Vertikalglied 10 einhängen, so würde nicht nur der Schenkel 14 des Horizontalgliedes 2 sondern auch der Bugbereich dieses Horizontalgliedes auf Biegung beansprucht. Die Länge der Biegezone b wäre erheblich größer. Die Länge der Biegezone würde zu höheren Biegemomenten und dadurch zu einer geringeren Bruchfestigkeit des Knotenpunktes führen.

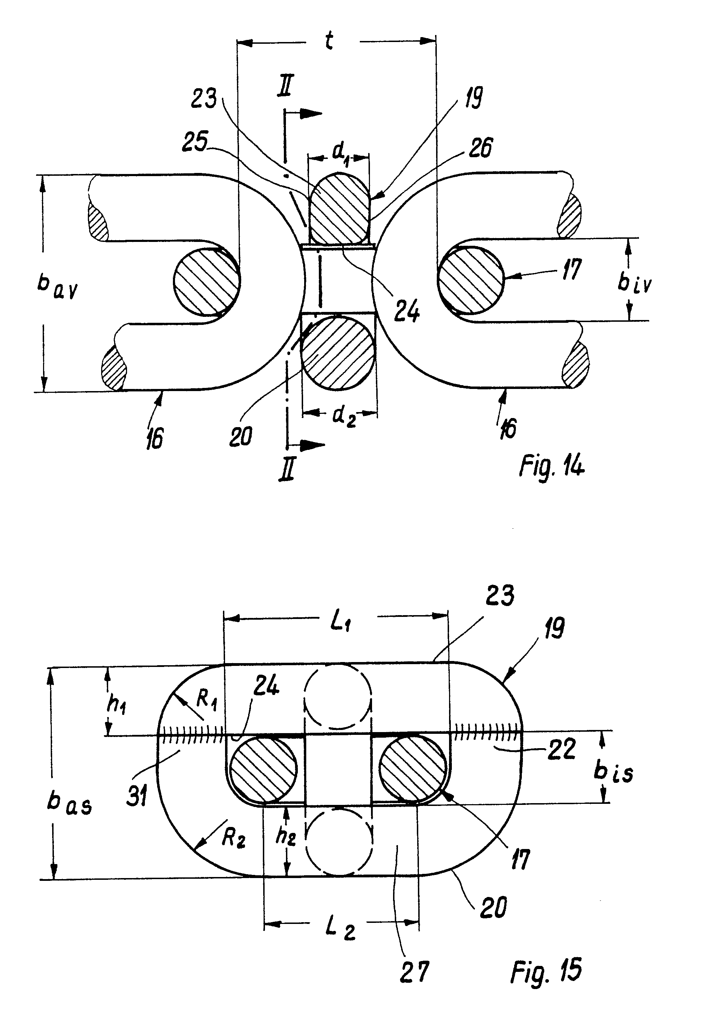

In den Figuren 14 bis 15 sind Teile einer Reifenkette dargestellt, deren Laufnetz aus ovalen Vertikalgliedern 16, ovalen Horizontalgliedern 17, kreisringförmigen Horizontalgliedern 18 und auf den Horizontalgliedern 17 angeordneten Stützgliedern 19 besteht, welche quer zur Längsachse der Horizontalglieder 17 verlaufen. Die Stützglieder 19 bestehen, wie aus den Fig. 14 und 15 erkennbar ist, wiederum aus jeweils einem U-förmigen Unterteil 20 und einem mit den Enden 21 und 22 des Unterteils 20 durch Schweißung verbundenen Stützbalken 23. Das Unterteil 20 wird von einem U-förmigen Rundstahlbügel gebildet, dessen Enden 21 und 22 plane Auflageflächen für eine plane Auflagefläche 24 des Stützbalkens bilden. Der Stützbalken 23 besitzt außerdem plane Seitenflächen 25 und 26.

Die Stützglieder 19 umfassen die Horizontalglieder 17 mit leichtem Spiel, wobei die innere Breite $b_{is}$ (vgl. Fig. 15) der Stützglieder 19 im wesentlichen gleich der inneren Breite $b_{iv}$ (vgl. Fig. 14) der Vertikalglieder 16 ist. Die äußere Breite $b_{as}$ (vgl. Fig. 15) der Stützglieder 19 ist ebenfalls im wesentlichen gleich der äußeren Breite $b_{av}$ (vgl. Fig. 14) der Vertikalglieder 16.

Mit Rücksicht darauf, daß der Stützbalken 23 im Regelfall der Fahrbahn zugewandt ist, sollte er eine höhere Verschleißfestigkeit haben als das Joch 27 des Unterteiles 20, dies schließt ein Wenden der Kette allerdings nicht aus.

Die Dicke $d_1$ des Stützbalkens 23 ist kleiner als die Dicke $d_2$ des Joches 27 des Unterteiles 20, um die Griffigkeit der Stützglieder 19 zu erhöhen.

Das Verschleißvolumen des Stützbalkens 23 läßt sich wiederum dadurch erhöhen, daß man den Radius $R_1$ der Abrundungen des Stützbalkens 23 kleiner macht als die Außenradien $R_2$ der Bögen des Unterteiles 20. Durch die Wahl unterschiedlicher Radien erhält man ungleiche Stützlängen $L_1$ und $L_2$ für den Stützbalken 23 und das Joch 27 des Unterteiles 20.

Es ist auch hier vorteilhaft, für den Stützbalken 23 und das Unterteil 20 nicht nur unterschiedliche Formen zu wählen, sondern auch unterschiedliche Materialien. So wird man für den Stützbalken 23 regelmäßig einen höher legierten verschleißfesteren Werkstoff als für das Unterteil verwenden.

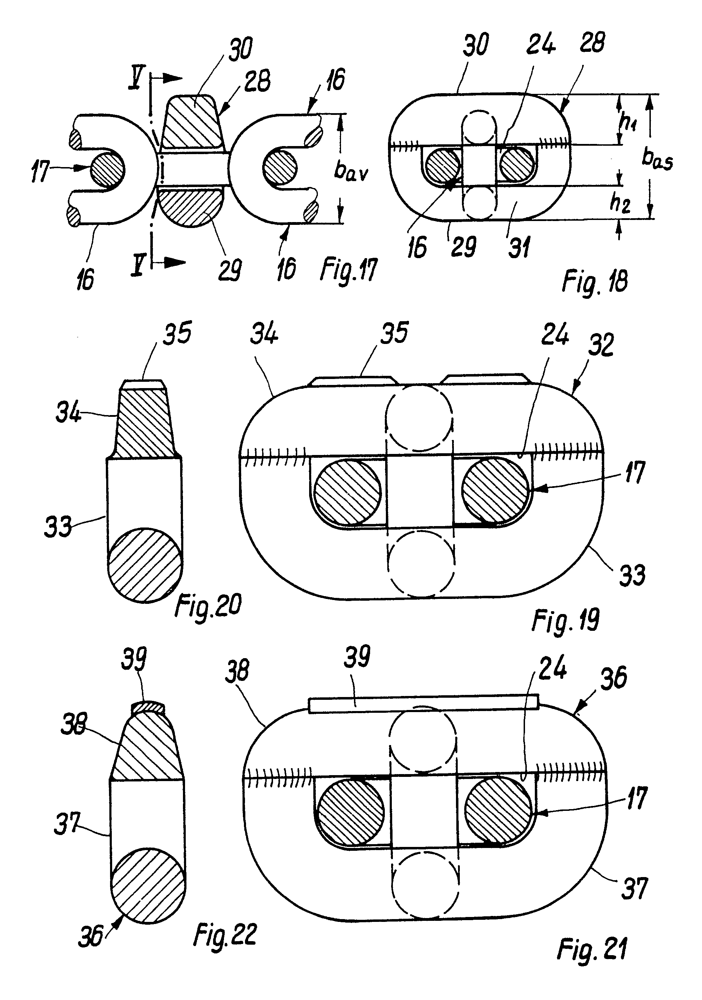

In den Fig. 17 und 18 ist teilweise im Schnitt die Seitenansicht von Kettengliedern einer Reifenkette dargestellt, die mit Stützgliedern 28 versehen ist, die aus einem Unterteil 29 und einem Stützbalken 30 bestehen. In diesem Fall ist die äußere Breite $b_{as}$ der Stützglieder 28 größer als die äußere Breite $b_{av}$ der Vertikalglieder 16, und zwar aufgrund einer entsprechenden Ausbildung des Stützbalkens 30, dessen Höhe $h_1$ größer ist als die Höhe $h_2$ des Joches 31 des Unterteiles 29. Der Stützbalken 30 verfügt über ein höheres Verschleißvolumen als das Joch des Stützgliedes 28 und die Schenkel der Vertikalglieder 16.

In den Fig. 19 und 20 ist ein Stützglied 32 aus einem Unterteil 33 und einem Stützbalken 34 dargestellt. In diesem Ausführungsbeispiel ist der Stützbalken 34 zur Erhöhung der Griffigkeit der mit den Stützgliedern 32 ausgestatteten Reifenkette mit Höckern 35 versehen.

Die Fig. 21 und 22 schließlich zeigen Stützglieder 36 aus einem Unterteil 37 und einem Stützbalken 38, der an seiner der Fahrbahn zugewandten Seite eine Auflage 39 aus einem hochverschleißfestem Material trägt, die vorzugsweise durch Auftragsschweißung aufgebracht werden kann. Dadurch daß der Stützbalken 38 durchgehend ist, eignet er sich besonders für die Anbringung von Auflagen der genannten Art.

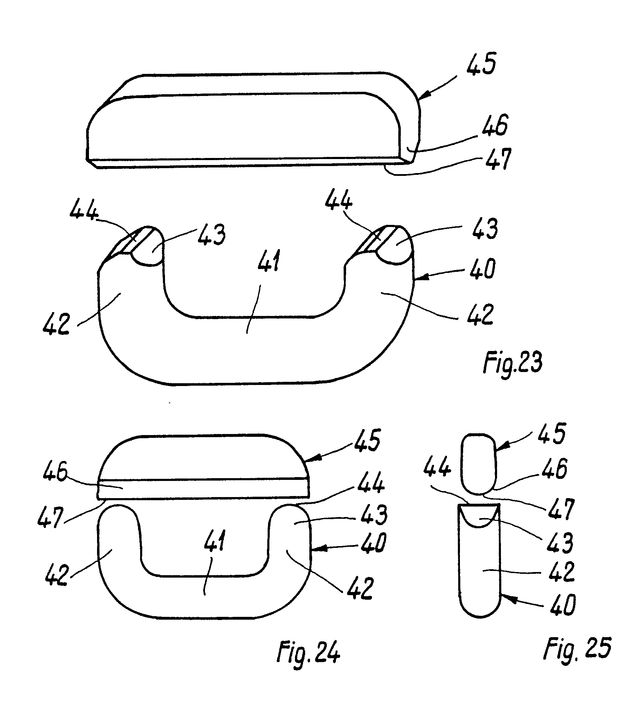

In Fig. 23 ist mit 40 allgemein ein Unterteil eines Kettengliedes bezeichnet, das ein Joch 41 und zwei Arme 42 aufweist. Die Enden der Arme 42 sind mit Verjüngungen 43 versehen, welche Scheitel 44 besitzen. 45 ist ein stabförmiges Oberteil, das ebenfalls eine Verjüngung 46 mit einem Scheitel 47 aufweist.

Bei dem Ausführungsbeispiel gemäß Fig. 23 sind die Verjüngungen 43 und 46 trapezförmig ausgebildet. In den Fig. 24 und 25 ist dagegen ein Ausführungsbeispiel mit bogenförmigen Verjüngungen 43 und 46 dargestellt. Mit Rücksicht auf die weitgehende Übereinstimmung zwischen den beiden Ausführungsbeispielen wurden einheitliche Bezugzeichen verwendet.

Durch die beschriebene Ausbildung der Enden der Arme 42 und des Oberteiles 45 wird der Schweißvorgang beim Verbinden des Oberteiles 45 mit dem jeweiligen Unterteil 40 günstig beeinflußt, so daß die Gewähr für eine hohe Festigkeit der geschweißten Kettenglieder gegeben ist.

**Patentansprüche**

1. Reifenkette, insbesondere Gleitschutzkette, mit aus Profilstababschnitten gebildeten Horizontal- und Vertikalgliedern (17 bzw. 1) und einer Knotenpunkte aufweisenden Netzkonfiguration, bei der mindestens einige vertikal orientierte Kettenglieder (1; 19; 28; 32; 36) ein der Lauffläche des Fahrzeugreifens zugeordnetes Unterteil (3; 20; 29; 33; 37) und ein mit diesem durch Schweißen verbundenes, der Fahrbahn zugeordnetes Oberteil aufweisen, dadurch gekennzeichnet, daß die Unterteile (3; 20; 29; 33; 37) im wesentlichen U-förmig ausgebildet sind und daß die nach oben weisenden Stirnflächen (4, 5) der beiden U-Schenkel des Unterteils (3; 20; 29; 33; 37) mit den Enden des als Stützbalken (7; 23; 30; 34; 38) ausgebildeten Oberteils verschweißt sind.

2. Reifenkette nach Anspruch 1, dadurch gekennzeichnet, daß sämtliche Vertikalglieder aus einem im wesentlichen U-förmigen Unterteil (3) und einem mit den Enden (4, 5) des Unterteils (3) durch Schweißung verbundenen Stützbalken (7) bestehen.

3. Reifenkette nach Anspruch 1, dadurch gekennzeichnet, daß die Vertikalglieder (1) ihres Laufnetzes aus einem U-förmigen Unterteil (3) und einem mit den Enden (4, 5) des Unterteils (3) durch Schweißung verbundenen Stützbalken (7) bestehen.

4. Reifenkette nach Anspruch 1, dadurch gekennzeichnet, daß mindestens die im Bereich der Knotenpunkte angeordneten Vertikalglieder (1) aus einem U-förmigen Unterteil (3) und einem mit den Enden (4, 5) des Unterteils (3) durch Schweißung verbundenen Stützbalken (7) bestehen.

5. Reifenkette nach einem der Ansprüche 1 bis 4, dadurch gekennzeichnet, daß das Unterteil (3; 33; 37) der Vertikalglieder (1) und/oder Stützglieder (32; 36) von einem Rundstahlbügel gebildet wird.

6. Reifenkette nach einem der Ansprüche 1 bis 5, dadurch gekennzeichnet, daß die Höhe ($h_1$) des Stützbalkens (7; 23; 30) größer als die Höhe ($h_2$) des Joches (6; 27; 31) ihres Unterteils (3; 20; 29) ist.

7. Reifenkette nach einem der Ansprüche 1 bis 6, dadurch gekennzeichnet, daß die Dicke ($d_1$) des Stützbalkens (7; 23) kleiner als die Dicke ($d_2$) des Joches (6; 27) des Unterteiles (3; 20) ist.

8. Reifenkette nach einem der Ansprüche 1 bis 7, dadurch gekennzeichnet, daß die dem Unterteil (3; 20) abgewandten Seiten der Enden des Stützbalkens (7; 23) abgerundet sind.

9. Reifenkette nach Anspruch 8, dadurch gekennzeichnet, daß der Radius ($R_1$) der Abrundungen des Stützbalkens (7; 23) kleiner ist als der Außenradius ($R_2$) der Bögen des Unterteils (3; 20).

10. Reifenkette nach einem der Ansprüche 1 bis 9, dadurch gekennzeichnet, daß der Stützbalken (7; 23; 30; 34; 38) aus einem Material höherer Festigkeit und/oder Legierung als das Unterteil (3; 20; 29; 33; 37) besteht.

11. Reifenkette nach einem der Ansprüche 1 bis 10, dadurch gekennzeichnet, daß der Stützbalken (7; 38) an seiner dem Unterteil (3; 37) abgewandten Seite mit einer Auflage (11; 39) aus hochverschleißfestem Material, insbesondere Hartmetall versehen ist.

12. Reifenkette nach einem der Ansprüche 1 bis 10, dadurch gekennzeichnet, daß der Stützbalken (7; 34) an seiner dem Unterteil (3; 33) abgewandten Seite mit Höckern (12; 35) versehen ist.

13. Reifenkette nach einem der Ansprüche 1 bis 12, dadurch gekennzeichnet, daß ihre Knotenpunkte von Vertikalgliedern (1) aus einem Unterteil (3) und einem Stützbalken (7) gebildet werden, in deren Unterteil zwei Schenkel (13, 14) eines ersten Horizontalgliedes (2) und ein Bug (15) eines zweiten Horizontalgliedes eingehängt sind (Fig. 11–13).

14. Reifenkette nach einem der Ansprüche 1 bis 13, dadurch gekennzeichnet, daß die Stützglieder (19; 28; 32; 36) die Horizontalglieder (17) mit leichtem Spiel umschließen.

15. Reifenkette nach einem der Ansprüche 1 bis 14, dadurch gekennzeichnet, daß die innere Breite ($b_{is}$) der Stützglieder (32; 36) kleiner als die innere Breite ($b_{iv}$) der von Ovalgliedern gebildeten Vertikalglieder (16) ist.

16. Reifenkette nach einem der Ansprüche 1 bis 15, dadurch gekennzeichnet, daß die äußere Breite ($b_{as}$) der Stützglieder (19) im wesentlichen gleich der äußeren Breite ($b_{av}$) der Vertikalglieder (16) ist.

17. Reifenkette nach einem der Ansprüche 1 bis 16, dadurch gekennzeichnet, daß die äußere Breite ($b_{as}$) der Stützglieder (28) größer als die äußere Breite ($b_{av}$) der Vertikalglieder (16) ist.

18. Reifenkette nach einem der Ansprüche 1 bis 17, dadurch gekennzeichnet, daß die Länge ($L_1$) des Stützbalkens (8) größer ist als die Länge ($L_2$) des Joches (12) des Unterteils (5).

19. Reifenkette nach einem der Ansprüche 1 bis 18, dadurch gekennzeichnet, daß der Stützbalken (23) an seiner den Schenkeln des Horizontalgliedes (17) zugewandten Seite eine plane Auflagefläche (24) aufweist.

20. Reifenkette nach einem der Ansprüche 1 bis 19, dadurch gekennzeichnet, daß der Stützbalken (23) plane Seitenflächen (25, 26) hat.

21. Verfahren zum Herstellen von Ketten, insbesondere Reifenketten nach einem der Ansprüche 1 bis 20, bei dem geschlossene Kettenglieder in offene Kettenglieder eingehängt bzw. eingelegt und die offenen Kettenglieder anschließend durch elektrisches Widerstandsstumpfschweißen geschlossen werden, dadurch gekennzeichnet, daß als offene Kettenglieder Kettenglieder verwendet werden, die aus einem U-förmigen Unterteil (40) und einem stabförmigen Oberteil (45) bestehen und daß die miteinander zu verschweißenden Enden der Unter- und Oberteile (40, 45) der offenen Kettenglieder vor dem Schweißen mit im wesentlichen dachförmigen Verjüngungen (43; 46) versehen werden, deren Scheitel (44; 47) sich in der Schweißstellung kreuzen.

22. Verfahren nach Anspruch 21, dadurch gekennzeichnet, daß die Scheitel (44; 47) der Verjüngungen (43; 46) sich unter einem Winkel von 90° kreuzen.

23. Verfahren nach Anspruch 21 oder 22, dadurch gekennzeichnet, daß die dachförmigen Verjüngungen (43; 46) einen trapezförmigen Querschnitt erhalten.

24. Verfahren nach einem der Ansprüche 21 bis 23, dadurch gekennzeichnet, daß die Unterteile (40) aus Rundmaterial gebogen werden.

25. Verfahren nach einem der Ansprüche 21 bis 24, dadurch gekennzeichnet, daß die Oberteile (45) durchgehend auf ihrer den Unterteilen (40) zugewandten Seite mit einer dachförmigen Verjüngung (46) versehen werden.

## Claims

1. A tyre chain, more particularly an anti-skid chain, comprising horizontal and vertical links (17, 1 respectively) made from portions of profiled rods and having a network configuration with junctions, at least some vertically-oriented links (1; 19; 28; 32; 36) comprising a bottom part (3; 20; 29; 33; 37) associated with the vehicle tyre tread and a top part connected thereto by welding and associated with the road, characterised in that the bottom parts (3; 20; 29; 33; 37) are substantially U-shaped and the upwardly-extending end-faces (4, 5) of the two U-limbs of the bottom part (3; 20; 29; 33; 37) are welded to the ends of the top part which is constructed as a reinforcing bar (7; 23; 30; 34; 38).

2. A tyre chain according to claim 1, characterised in that all the vertical links comprise a substantially U-shaped bottom part (3) and a reinforcing bar connected by welding to the ends (4, 5) of the bottom part (3).

3. A tyre chain according to claim 1, characterised in that the vertical links (1) of the tread network thereof comprise a U-shaped bottom part (3) and a reinforcing bar (7) connected by welding to the ends (4, 5) of the bottom part (3).

4. A tyre chain according to claim 1, characterised in that at least the vertical links (1) near the junctions comprise a U-shaped bottom part (3) and a reinforcing bar (7) connected by welding to the ends (4, 5) of the bottom part (3).

5. A tyre chain according to any of claims 1 to 4, characterised in that the bottom part (3; 33; 37) of the vertical links (1) and/or reinforcing links (32, 36) is made from bent round steel.

6. A tyre chain according to any of claims 1 to 5, characterised in that the height ($h_1$) of the reinforcing bar (7; 23; 30) is greater than the height ($h_2$) of the yoke (6; 27; 31) of the bottom part (3, 20; 29) thereof.

7. A tyre chain according to any of claims 1 to 6, characterised in that the thickness ($d_1$) of the reinforcing bar (7; 23) is less than the thickness ($d_2$) of the yoke (6; 27) of the bottom part (3; 20).

8. A tyre chain according to any of claims 1 to 7, characterised in that the sides of the ends of the reinforcing bar (7; 23) remote from the bottom part (3; 20) are rounded.

9. A tyre chain according to claim 8, characterised in that the radius ($R_1$) of the round parts of the reinforcing bar (7; 23) is less than the outer radius ($R_2$) of the bends in the bottom part (3; 20).

10. A tyre chain according to any of claims 1 to 9, characterised in that the reinforcing bar (7; 23; 30; 34; 38) is made of stronger material or alloy than the bottom part (3; 20; 29; 33; 37).

11. A tyre chain according to any of claims 1 to 10, characterised in that the side of the reinforcing bar (7; 38) remote from the bottom part (3, 37) is given a lining (11; 39) of highly wear-resistant material, more particularly hard metal.

12. A tyre chain according to any of claims 1 to 10, characterised in that the side of the reinforcing bar (7; 34) remote from the bottom part (3, 33) is provided with humps (12; 35).

13. A tyre chain according to any of claims 1 to 12, characterised in that the junctions are formed by vertical links (1) having a bottom part (3) and a reinforcing bar (7) in which bottom part (3), two limbs (13, 14) of a first horizontal link (2) and a bend (15) of a second horizontal link are suspended (Figs. 11–13).

14. A tyre chain according to any of claims 1 to 13, characterised in that the reinforcing links (19; 28; 32; 36) surround the horizontal links (17) with slight clearance.

15. A tyre chain according to any of claims 1 to 14, characterised in that the inner width ($b_{is}$) of the reinforcing links (32; 36) is less than the inner width ($b_{iv}$) of the vertical links (16) which are made up of oval links.

16. A tyre chain according to any of claims 1 to 15, characterised in that the outer width ($b_{as}$) of the reinforcing links (19) is substantially equal to the outer width ($b_{av}$) of the vertical links (16).

17. A tyre chain according to any of claims 1 to 16, characterised in that the outer width ($b_{as}$) of the reinforcing links (28) is greater than the outer width ($b_{av}$) of the vertical links (16).

18. A tyre chain according to any of claims 1 to 17, characterised in that the length ($L_1$) of the reinforcing bar (8) is greater than the length ($L_2$) of the yoke (12) of the bottom part (5).

19. A tyre chain according to any of claims 1 to 18, characterised in that the side of the reinforcing bar (23) remote from the limbs of the horizontal link (17) has a flat bearing surface (24).

20. A tyre chain according to any of claims 1 to 19, characterised in that the reinforcing bar (23) has flat side surfaces (25, 26).

21. A method of manufacturing chains, more particularly tyre chains according to any of claims 1 to 20, in which closed links are suspended or inserted into open links and the open links are then welded by electric resistance butt welding, characterised in that the open links comprise a U-shaped bottom part (40) and a rod-like top part (45) and the ends of the bottom and top parts (40, 45) of the open links to be welded together are provided before welding with substantially roof-shaped tapers (43, 46) having apices (44, 47) which intersect in the weld position.

22. A method according to claim 21, characterised in that the apices (44, 47) of the tapers (43, 46) intersect at an angle of 90°.

23. A method according to claim 21 or 22, characterised in that the roof-like tapers (43, 46) have a trapezoidal cross-section.

24. A method according to any of claims 21 to 23, characterised in that the bottom parts (40) are bent from round material.

25. A method according to any of claims 21 to 24, characterised in that the top parts are provided with a roof-shaped taper (46) all the way along their side facing the bottom parts (40).

**Revendications**

1. Chaîne pour pneus, en particulier chaîne antidérapante, comportant des maillons horizontaux et des maillons verticaux (respectivement 17 et 1), formés par des sections de barres profilées, et présentant une configuration en réseau comportant des points de jonction, dans laquelle au moins quelques maillons de chaîne (1; 19; 28; 32; 36) orientés verticalement, comportent une partie inférieure (3; 20; 29; 33; 37) associée à la surface de roulement du pneu du véhicule, et une partie supérieure associée à la chaussée, assemblée à cette partie inférieure par soudage, caractérisée en ce que les parties inférieures (3; 20; 29; 33; 37) sont à peu près en forme de U, et en ce que les faces frontales (4, 5), tournées vers le haut, des deux branches du U de la partie inférieure (3; 20; 29; 33; 37) sont soudées aux extrémités de la partie supérieure servant de pièce de support (7; 23; 30; 34; 38).

2. Chaîne pour pneus selon la revendication 1, caractérisée en ce que tous les maillons verticaux sont constitués d'une partie inférieure (3) à peu près en forme de U, et d'une pièce de support (7) assemblée par soudage aux extrémités (4, 5) de la partie inférieure (3).

3. Chaîne pour pneus selon la revendication 1, caractérisée en ce que les maillons verticaux (1) de son réseau de roulement sont constitués d'une partie inférieure (3) en U et d'une pièce de support (7) assemblée par soudage aux extrémités (4, 5) de la partie inférieure (3).

4. Chaîne pour pneus selon la revendication 1, caractérisée en ce qu'au moins les maillons verticaux (1) situés dans la zone des points de jonction, sont constitués d'une partie inférieure (3) en U et d'une pièce de support (7) assemblée par soudage aux extrémités (4, 5) de la partie inférieure (3).

5. Chaîne pour pneus selon l'une des revendications 1 à 4, caractérisée en ce que la partie inférieure (3; 33; 37) des maillons verticaux (1) et/ou des maillons de support (32; 36) est formée par un étrier en rond d'acier.

6. Chaîne pour pneus selon l'une des revendications 1 à 5, caractérisée en ce que la hauteur (h₁)

de la pièce de support (7; 23; 30) est supérieure à la hauteur (h₂) de l'arc (6; 27; 31) de sa partie inférieure (3; 30; 29).

7. Chaîne pour pneus selon l'une des revendications 1 à 6, caractérisée en ce que l'épaisseur (d₁) de la pièce de support (7; 23) est inférieure à l'épaisseur (d₂) de l'arc (6; 27) de la partie inférieure (3; 20).

8. Chaîne pour pneus selon l'une des revendications 1 à 7, caractérisée en ce que les faces éloignées de la partie inférieure (3; 20), des extrémités de la pièce de support (7; 23), sont arrondies.

9. Chaîne pour pneus selon la revendication 8, caractérisée en ce que le rayon (R₁) des parties arrondies de la pièce de support (7; 23) est inférieur au rayon extérieur (R₂) des arcs de la partie inférieure (3; 20).

10. Chaîne pour pneus selon l'une des revendications 1 à 9, caractérisée en ce que la pièce de support (7; 23; 30; 34; 38) est réalisée dans un matériau et/ou un alliage de résistance supérieure à la pièce inférieure (3; 20; 29; 33; 37).

11. Chaîne pour pneus selon l'une des revendications 1 à 10, caractérisée en ce que la pièce de support (7; 38) est pourvue sur sa face éloignée de la partie inférieure (3; 37) d'un revêtement (11; 39) réalisé dans un matériau très résistant à l'usure, en particulier un métal dur.

12. Chaîne pour pneus selon l'une des revendications 1 à 10, caractérisée en ce que la pièce de support (7; 33) est pourvue de bossages (12; 35), sur sa face éloignée de la partie inférieure (3; 33).

13. Chaîne pour pneus selon l'une des revendications 1 à 12, caractérisée en ce que ses points de jonction sont formés par des maillons verticaux (1), constitués d'une partie inférieure (3) et d'une pièce de support (7), dans la partie inférieure desquels sont accrochées deux branches (13, 14) d'un premier maillon horizontal (2), et le nez (15) d'un deuxième maillon horizontal (figures 11 à 13).

14. Chaîne pour pneus selon l'une des revendications 1 à 13, caractérisée en ce que les maillons de support (19; 28; 32; 36) entourent les maillons horizontaux (17), avec un petit jeu.

15. Chaîne pour pneus selon l'une des revendications 1 à 14, caractérisée en ce que la largeur intérieure (b_is) des maillons de support (32; 36) est inférieure à la largeur intérieure (b_iv) des maillons verticaux (16) formés par des maillons ovales.

16. Chaîne pour pneus selon l'une des revendications 1 à 15, caractérisée en ce que la largeur extérieure (b_as) des maillons de support (19) est à peu près égale à la largeur extérieure (b_av) des maillons verticaux (16).

17. Chaîne pour pneus selon l'une des revendications 1 à 16, caractérisée en ce que la largeur extérieure (b_as) des maillons de support (28) est supérieure à la largeur extérieure (b_av) des maillons verticaux (16).

18. Chaîne pour pneus selon l'une des revendications 1 à 17, caractérisée en ce que la longueur (L₁) de la pièce de support (8) est supérieure à la longueur (L₂) de l'arc (12) de la partie inférieure (5).

19. Chaîne pour pneus selon l'une des revendications 1 à 18, caractérisée en ce que la pièce de support (23) présente une surface d'appui plane sur sa face tournée vers les branches du maillon horizontal (17).

20. Chaîne pour pneus selon l'une des revendications 1 à 19, caractérisée en ce que la pièce de support (23) présente des faces latérales (25, 26) planes.

21. Procédé de fabrication de chaînes, en particulier de chaînes pour pneus selon l'une des revendications 1 à 20, dans lequel des maillons de chaîne fermés sont accrochés ou introduits dans des maillons de chaîne ouverts, et en ce que les maillons de chaîne ouverts sont ensuite fermés par soudage électrique bout-à-bout par résistance, caractérisé en ce qu'on utilise comme maillons de chaîne ouverts, des maillons de chaîne qui sont constitués d'une partie inférieure (40) en U et d'une partie supérieure (45) en forme de barre, et en ce que les extrémités à souder entre elles, des parties inférieures et supérieures (40, 45) des maillons de chaîne ouverts, sont pourvues, avant soudage, de parties rétrécies (43; 46) à peu près en forme de toit, dont les sommets (44; 47) se croisent dans la position de soudure.

22. Procédé selon la revendication 21, caractérisé en ce que les sommets (44; 47) des parties rétrécies (43; 46) se croisent sous un angle de 90°.

23. Procédé selon la revendication 21 ou 22, caractérisé en ce que les parties rétrécies (43; 46) en forme de toit ont une section transversale trapézoïdale.

24. Procédé selon l'une des revendications 21 à 23, caractérisé en ce que les parties inférieures (40) sont faites d'un matériau rond courbé.

25. Procédé selon l'une des revendications 21 à 24, caractérisé en ce que les parties supérieures (45) sont pourvues sur toutes leurs faces tournées vers les parties inférieures (40), d'une partie rétrécie (46) en forme de toit.

Fig. 1

Fig.2

Fig. 3

Fig. 4

Fig.5

Fig. 6

Fig. 7

Fig. 8

Fig. 9

Fig. 10

Fig. 11

Fig. 12

Fig. 13

Fig. 14

Fig. 15

*Fig. 16*

Fig. 17

Fig. 18

Fig. 20

Fig. 19

Fig. 22

Fig. 21

Fig.23

Fig. 24

Fig. 25